**Europäisches Patentamt**

**European Patent Office**

**Office européen des brevets**

(11) Publication number: **0 138 067**
**B1**

(12) **EUROPEAN PATENT SPECIFICATION**

(45) Date of publication of patent specification: **19.11.87**

(21) Application number: **84110924.2**

(22) Date of filing: **13.09.84**

(51) Int. Cl.⁴: **B 60 B 33/00**

(54) Wheel bracket mounting structure and method of making the same.

(30) Priority: **13.10.83 US 541599**

(43) Date of publication of application:
**24.04.85 Bulletin 85/17**

(45) Publication of the grant of the patent:
**19.11.87 Bulletin 87/47**

(84) Designated Contracting States:
**DE FR GB**

(56) References cited:
**FR-A-1 179 632**
**US-A- 932 038**
**US-A-1 541 280**
**US-A-2 500 854**

(73) Proprietor: **STANDEX INTERNATIONAL**
**CORPORATION**
**6 Manor Parkway**
**Salem New Hampshire 03079 (US)**

(72) Inventor: **Black, John William**
**5281 Walnut Grove**
**Hickory Corners Michigan (US)**

(74) Representative: **Liebau, Gerhard, Dipl.-Ing.**
**Birkenstrasse 39**
**D-8900 Augsburg 22 (DE)**

Courier Press, Leamington Spa, England.

# 0 138 067

**Description**

The invention relates to a wheel bracket mounting structure defined in the prior art portion of the annexed Claim 1. The invention further relates to a method of making a wheel bracket mounting structure in accordance with the prior art portion of the annexed claim 23.

Wheel bracket assemblies, which include a wheel bracket and a wheel rotatably supported on the bracket, are utilized in many applications, for example on shopping carts. In applications of this type, the wheel bracket assembly is frequently subjected to rough treatment and therefore must be durable and reliable. However, in industries which are highly competitive, it is also important that the wheel bracket assembly be relatively inexpensive in order to minimize the overall cost of the final product.

A wheel bracket mounting structure is known in accordance with the prior art portion of claim 1 (US—A—932 038) in which two elongated bracket members are arranged in a mirror image manner on both sides of a horizontal central section both bracket members being unitary with the central section and forming a U-shaped bracket with the wheel rotatably supported between the bracket members. The stem means is a separate vertical pin being riveted with its lower end to the middle of said central section. The vertical pin is inserted in a sleeve adapted to be connected to a support member on a wheeled vehicle. An axle extending between said axle mounting sections and rotably supporting the wheel is riveted to said axle mounting sections. A rigid structure exists between the bulbously shaped structure means and the flat, plate like portions to which the axle is secured. Although this conventional arrangement has been adequate for its intended purposes, it has not been satisfactory in all respects. In particular, several separate manufacturing steps are required to fabricate the wheel bracket, thus making the wheel bracket assembly relatively expensive. Further, the connection between the pin and bracket and also between the axle and the axle mounting sections is subjected to relatively large stresses and frequently tends to loosen over a period of time. The US—A—2 500 854 discloses a wheel bracket mounting structure which is very similar to the aforementioned wheel bracket mounting structure. The only difference is that the wheel bracket mounting structure according to US—A—2 500 854 has no stem mounting section. Instead of this there is provided a horizontal support plate arranged above and parallel to the central section and being adapted for attachment to the support member on a wheeled vehicle. Further the support plate and the central section by a vertical rivet ball bearings being provided between both parts.

A further consideration is that it is usually desirable for a wheel bracket assembly of the foregoing type to have a small amount of pivoting and shock-absorbing capability when mounted non pivotable on a shopping cart or other device, in order to minimize the stresses applied to the bearings. However, conventional arrangements which provide limited pivoting and/or shock-absorbing capability typically involve increased structural complexity of the wheel bracket assembly and thus an increased number of manufacturing steps to fabricate the wheel bracket assembly.

It is the object of the present invention to provide a wheel bracket mounting structure of the type disclosed in US—A—932038 which is simple in structure, inexpensive to manufacture and has shock-absorbing capability to further enhance the durability. A further object of the invention is to provide a method for making a wheel bracket mounting structure, as aforesaid, which can be fabricated with a minimum number of steps and with a minimal amount of labor.

According to the present invention the foregoing objects are achieved by a wheel bracket mounting structure according to the characterising portion of claim 1 and a method according to the characterising portion of claim 23.

The exact nature of the present invention as well as other objects and advantages thereof will be readily apparent from consideration of the following specification in connection with the exemplary embodiments illustrated in the drawings, in which:

Figure 1 is a side view of a wheel supported vehicle, namely, a shopping cart having a wheel bracket mounting structure embodying the invention mounted thereon;

Figure 2 is an enlarged front view of a wheel bracket mounting structure embodying the invention and taken along the line II—II of Figure 1;

Figure 2A is a fragmentary sectional view taken along the line IIA—IIA in Figure 2;

Figure 3 is a sectional view taken along the line III—III of Figure 2.

Figure 4 is a sectional view taken along the line IV—IV of Figure 2;

Figure 5 is a front elevational view of a second embodiment of the wheel bracket mounting structure;

Figure 6 is a sectional view taken along the line VI—VI of Figure 5;

Figure 7 is a front elevational view of a third embodiment of the wheel bracket mounting structure embodying the invention;

Figure 8 is a sectional view taken along the line VIII—VIII of Figure 7;

Figure 9 is a front elevational view of a fourth embodiment of the wheel bracket mounting structure embodying the invention;

Figure 10 is a sectional view taken along the line X—X of Figure 9;

Figure 11 is a front elevational view of a fifth embodiment of the wheel bracket mounting structure embodying the invention;

Figure 12 is a sectional view taken along the line XII—XII of Figure 11;

2

Figure 13 is a front elevational view of a sixth embodiment of the wheel bracket mounting structure embodying the invention;

Figure 14 is a sectional view taken along the line XIV—XIV of Figure 13;

Figure 15 is a front elevational view of a seventh embodiment of the wheel bracket mounting structure embodying the invention;

Figure 16 is a sectional view taken along the line XVI—XVI of Figure 15;

Figure 17 is a sectional view taken along the line XVI—XVI of Figure 15;

Figure 18 is a front elevational view of an eighth embodiment of the wheel bracket mounting structure embodying the invention;

Figure 19 is a sectional view taken along the line XIX—XIX of Figure 18; and

Figure 20 is a sectional view taken along the line XX—XX of Figure 18.

Certain terminology is used in the following description for convenience in reference only and is not to be considered limiting. For example, the words "up", "down", "front" and "rear" will designate directions in the drawings to which reference is made. The words "in" and "out" will respectively refer to directions toward and away from the geometric center of the wheel bracket mounting structure and designated parts thereof. Such terminology will include the words specifically mentioned above, derivatives thereof and words of similar import.

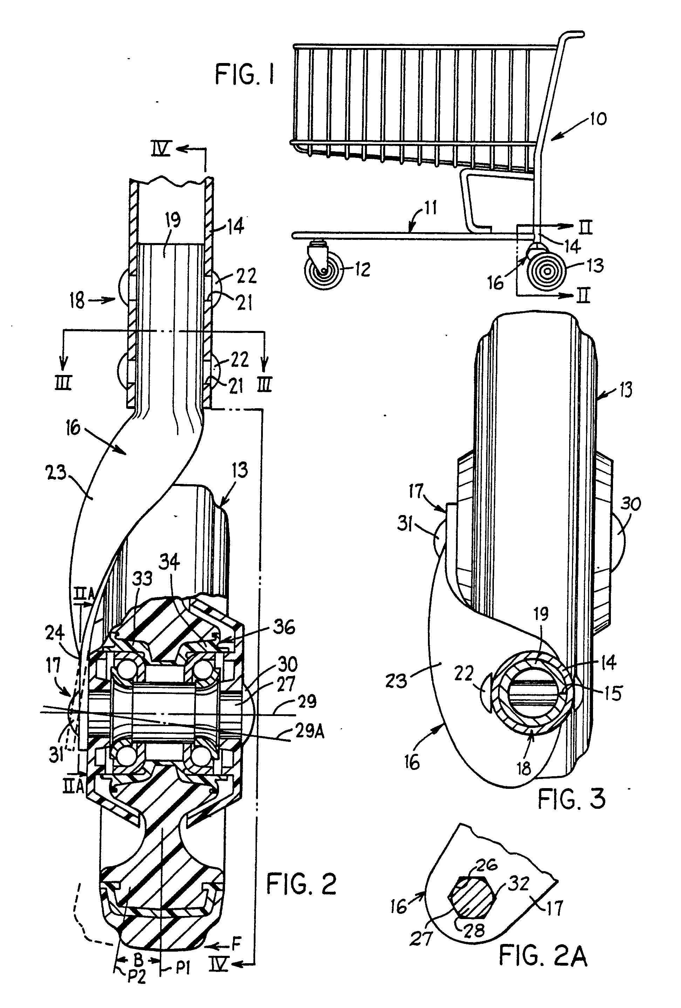

A conventional type of wheeled vehicle 10 is illustrated in Figure 1. The wheeled vehicle is comprised of a base frame 11 having the usual pivotal or castored front wheels 12 and fixed or stationary rear wheels 13. In this particular embodiment, the rear wheels 13 include a wheel bracket mounting structure which embodies the invention and, accordingly, the following discussion will be directed to the various embodiments of the rear wheel bracket mounting structure. Of particular importance is the downwardly extending and opening tubular segment 14 of the base frame 11, since it is to this segment that the wheel bracket mounting structure is secured.

Referring to Figure 2, the lower portion of the tubular segment 14 is illustrated therein. As stated above, the tubular segment 14 is the part of the base frame 11 to which the wheel bracket mounting structure is secured. More specifically, the wheel bracket mounting structure includes an elongated and flexible bracket member 16 having at opposite ends thereof an axle supporting section 17 and a stem section 18. In all embodiments described hereinafter, the bracket member 16 is formed from a single piece of metal of uniform thickness, preferably a high carbon steel plate such as type C-1065 and, after the stamping operation, is preferably heat treated and drawn to give it a Rockwell hardness in the range of 45 to 55 Rockwell C and preferably 48 to 52 Rockwell C. This essentially converts the bracket member to spring steel. The thus-increased tensile strength of the steel will enable the steel to withstand substantial shock loads without any plastic deformation.

In the embodiment of Figures 2 to 4, the stem section 18 is formed into a split cylinder 19. The diameter of the cylinder 19 is equal to or initially slightly greater than the internal diameter of the tubular segment 14 on the base 11 of the wheeled vehicle 10. If the cylinder 19 is initially larger in diameter than the internal diameter of the tubular segment 14, there will normally be a space provided between the mutually adjacent edges thereof, as at 15, to enable the assembler or installer to pinch the edges together so that the effective diameter becomes less than the internal diameter of the tubular segment to facilitate an insertion of the cylinder 19 into the tubular segment 14. Thereafter, the edges will separate due to the resilience of the steel to snugly hold the cylinder in the tubular segment. The cylinder 19 has a sufficient length to be received a substantial distance inside the tubular segment 14 as illustrated in Figure 2. In this particular embodiment, a pair of vertically spaced and aligned holes 21 are provided in both the tubular segment 14 and the cylinder 19, each receiving a rivet 22 therein to securely hold the cylinder 19 to the tubular segment 14 and to prevent relative rotation therebetween.

An intermediate section 23 is provided on the bracket member between the axle mounting section 17 and the stem section 18. The intermediate section flares smoothly downwardly and laterally outwardly from the lower end of the stem section 18, is bulbously curved in a manner such that the centerpoints of all radii of curvature lie on the side of said bracket member adjacent said wheel, and increase in width in a direction away from the stem segment 18. There are no sharp corners in the intermediate section. That is, the intermediate section 23 has a rounded contour to prevent elastic flexing occurring at the juncture between the intermediate section 23 and the stem section 18 as well as along the length of the intermediate section. It is desirable for there to be a rigid relationship between the stem section 18 and the intermediate section 23. The intermediate section than becomes less wide, preferably uniformly tapers toward the axle mounting section 17.

The axle mounting section 17 is contiguous with the lower portion of the intermediate section 23 and is horizontally and vertically offset from the stem section 18. The axle mounting section 17 is generally a flat, platelike portion extending in a plane parallel to the central axis 37 of the cylinder 19. The juncture between the axle mounting section 17 and the intermediate section 23, namely at 24, defines a region whereat elastic flexing is desirable. The intermediate section 23 has, therefore, a greater resistance to lateral elastic flex than the region indicated by the reference character 24. The purpose of this particular structure will be explained below.

The axle mounting section has a noncircular opening 26 punched therethrough (see Figure 2A). A solid axle member 27 is provided and has a necked down-portion 28 received in the noncircular opening 26 as

3

shown in Figure 2A. The axis 29 of the axle 27 is oriented preferably perpendicular to the plane of the flat, platelike, axle mounting section 17. The material of the necked down-portion 28 is deformed into a rivet head 31. Simultaneously during this forming of the rivet head 31, the metal is caused to flow and fill the voids 32 (Figure 2A) of the noncircular opening 26 to fixedly and rigidly lock the axle 27 to the axle mounting section 17. An enlargement 30 is provided on the axis 27 at the free end thereof to prevent or stop the wheel 13 from moving axially away from the bracket member 16.

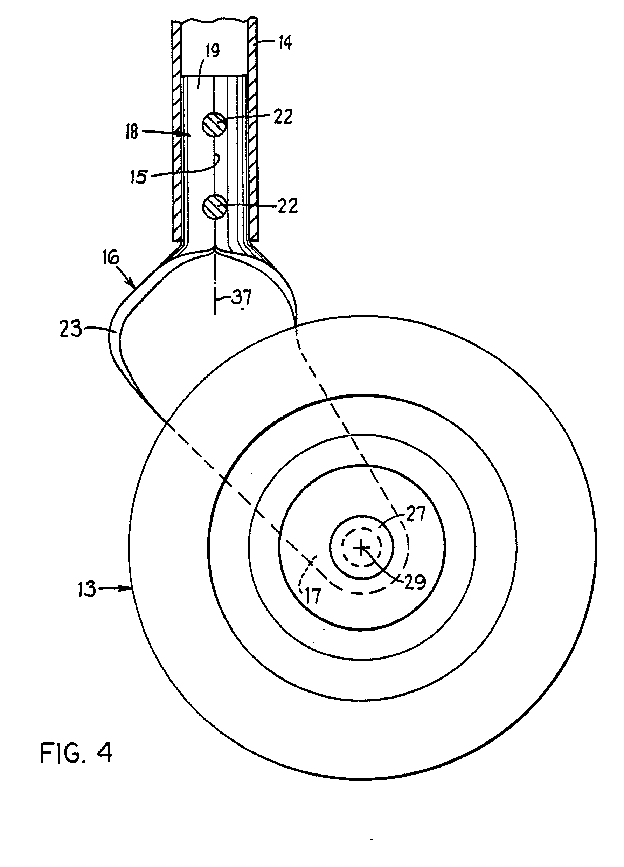

As shown in Figure 4, the axis 29 is offset horizontally and to the rear of the central axis 37 of the cylinder 19.

In this particular embodiment, the axle 27 is identical to the axle disclosed in U.S. Patent No. 4 318 204. In fact, the entirety of the wheel 13 including the axle therefor is identical to the wheel disclosed in the aforementioned patent. Accordingly, reference thereto is to be incorporated herein. It is, of course, to be understood that other wheel constructions can also be utilized in combination with the bracket member described hereinabove without departing from the scope of the invention. In other words, the disclosure is not to be considered limited to the particular wheel shown in Figure 2. Thus, a detailed discussion of the particular characteristics of the wheel is deemed unnecessary.

In addition to the relative flexing movement that is permitted between the plane of rotation of the wheel 13 relative to the axis 29 permitted by the thick and elastic segments 33 and 34 of the liner 36, and as described in aforementioned Patent No. 4 318 204, a flexing of the axle mounting section 17 relative to the intermediate section 23 is permitted to facilitate a flexing movement of the axis 29 to a secondary position illustrated by the reference 29A. This particular feature of the bracket member becomes important for the following reasons. In use of the wheel bracket mounting structure which includes the aforementioned bracket member 16 and axle 27 mounted thereon combined with the particular features of the axle mounting section 17 and stem section 18, both of which are isolated by an intermediate section 23, severe loads are applied to the wheel, particularly in an axial direction as opposed to the normal loads applied in the radial direction. These axial loads are generally caused by the user of a wheeled vehicle, such as a shopping cart, pushing on the vehicle handle in a direction which causes a load to be applied to the tread of the wheel as indicated by the arrow F in Figure 2. While the aforementioned thick and elastic segments 33 and 34 of the liner 36 have been heretofore sufficient to compensate for this type of load, it has been discovered that in certain situations additional loads have been applied to the wheel bracket assemblies used heretofore and have resulted in a plastic deformation of the bracket member. This invention, however, is to provide structure which will enable further compensation of these additional loads applied to the overall wheel bracket mounting structure. In this arrangement, there is provided for an elastic flexing to occur at the region 24 between the intermediate section 23 and the axle mounting section 17 of the bracket member 16 enabling the axis 29 to shift temporarily under severe load to the alternate position illustrated by the reference character 29A. This flexing will be in addition to the flexing normally provided when wheels are used which are capable of such flexing movement, particularly those wheels disclosed in U.S. Patent Nos. 4 318 204 and Reissue Patent No. 31 110. Both of the wheel structures disclosed in these patents have solid axles. However, it is to be recognized that axle structures such as is disclosed in U.S. Patent No. 4 072 373 are capable of use with this invention, it being recognized that the axle must be fixedly secured to the axle mounting section 17.

During testing of the wheel bracket mounting structure described hereinabove, certain surprising results were achieved. For example, and referring to the structure disclosed and claimed in EPC application Serial No. 84 104480.3 (publication number 0 123 298) filed April 19, 1984, a series of loads were applied to the tread of the wheel at a location corresponding to the location indicated by the reference arrow F in Figure 2 herein. The amount of flex was then measured (distance B) to indicate the amount of elastic flexing that was permitted between the normal plane of rotation P1 and a secondary plane of rotation P2 caused by the application of the force so indicated. The following chart indicates the results as applied to the structure disclosed in the aforementioned application Serial No. 84 104480.3, particularly Figure 2 therein, and utilizing a 12,7 cm (5 inch) diameter wheel.

| F in N (pounds) | B deflection in mm (inches) |
|---|---|
| 44,48 (10) | 1,65 (,065) |
| 88,96 (20) | 3,1 (,122) |
| 133,44 (30) | 5,21 (,205) |
| 177,92 (40) | 7,21 (,284) |
| 222,4 (50) | 9,78 (,385) |
| 266,88 (60) | 11,86 (,467) |
| 311,36 (70) | 14,48 (,570) |
| 355,84 (80) | 16,59 (,653) |
| 400,32 (90) | 19,0 (,748) |
| 444,8 (100) | 21,67 (,853) |

The structure of Figures 2 to 4 were subjected to the same test, using the same wheel, and the following results were achieved, also utilizing a 12,7 cm (5 inch) diameter wheel:

| F in N (pounds) | B deflection in mm (inches) |
|---|---|
| 44,48 (10) | 4,27 ( ,168) |
| 88,96 (20) | 7,57 ( ,298) |
| 133,44 (30) | 10,54 ( ,415) |
| 177,92 (40) | 14,0 ( ,555) |
| 222,4 (50) | 17,91 ( ,705) |
| 266,88 (60) | 21,46 ( ,845) |
| 311,36 (70) | 26,67 (1,050) |
| 355,84 (80) | 31,24 (1,230) |
| 400,32 (90) | 35,43 (1,395) |
| 444,8 (100) | 40,13 (1,580) |
| 489,28 (110) | 45,09 (1,775) |

The unexpected increase in the amount of deflection permitted by the structure of Figures 2 to 4 has enhanced the durability of the bracket member 16 and enables same to be subjected to severe loads without plastically deforming the bracket member. When the bracket member 16 is employed on wheels used on shopping carts, clerks returning shopping carts to the interior of the store, by first gathering plural carts in a nested relationship in the parking lot and pushing them, one nested within the other, often times encounter locations whereat the entire nested arrangement of shopping carts must be turned at a right angle. It is at this point in time that a severe load is applied to the wheel at the location indicated by the reference arrow F in Figure 2. It is also at this point in time that a severe load is applied to the wheel bracket mounting structure. The provision of the bracket member which I have described above in reference to Figures 2 to 4 enables the wheel bracket mounting structure to withstand the severe load and, following a termination of the severe load, return to its normal position enabling the wheel 13 to return to its proper plane of rotation P1.

In reference to this testing, the metal employed for the bracket member 16 was 3,05 mm (,120 inches) thick and the internal diameter of the tubular segment 14 was 18,3 mm (,720 inches) in diameter. The metal used in the testing of the arrangement disclosed in the aforementioned application Serial No. 84 104480.3 employed a metal having a 2,64 mm (,104 inches) thickness and the internal diameter of the tubular segment was, as with the embodiment disclosed in Figures 2 to 4 of this application, 18,3 mm (,720 inches) in diameter.

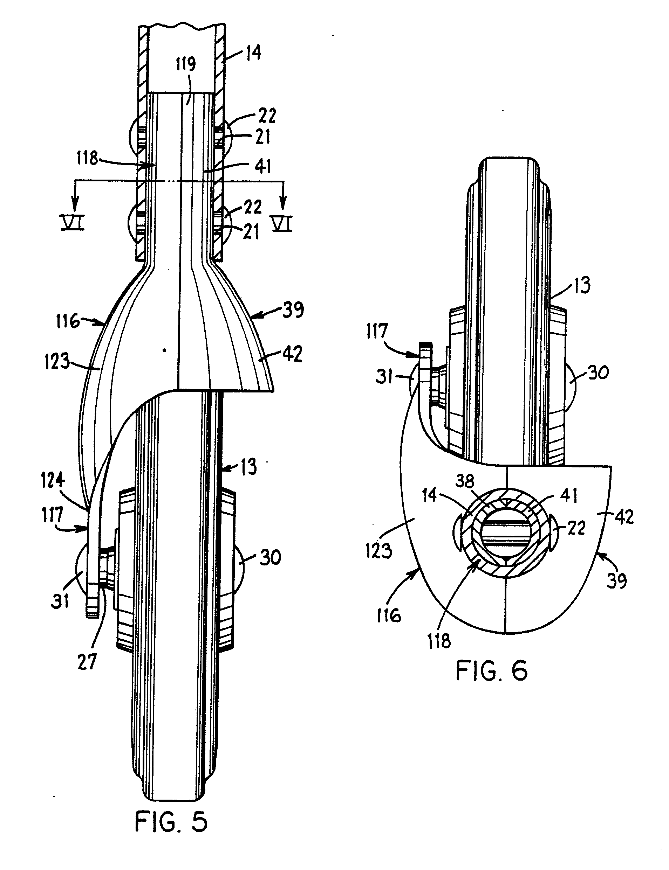

Alternate embodiment of Figures 5—6

The embodiment of Figures 5 and 6 is similar to the embodiment of Figures 2 to 4 described above. Therefore, the same reference numerals will be used to designate similar or identical structure described above in relation to Figures 2 to 4 but with a "1" prefix added thereto. That is, the bracket member 116 is composed of an axle mounting section 117 and a stem section 118 separated by an intermediate section 123. As with the embodiment of Figures 2 to 4, the intermediate section 123 has a greater resistance to elastic flex than does the juncture 124 between the intermediate section 123 and the axle mounting section 117. In this particular embodiment, the stem section 118 is not cylindrical in shape but is, instead, semicylindrical in shape as shown at 38 in Figure 6. To form a cylinder, the same as the cylinder 19 in the embodiment of Figures 2 to 4, an additional skirt member 39 is formed having a stem section 41 thereon which is semicylindrical in shape, which when placed in mating relationship with the semicylindrical portion 38 of the stem section 118 forms a cylinder 119. The cylinder 119 is received in the tubular segment 14 and is secured in place by plural rivets 22 received in aligned openings 21 in the tubular segment 14 and the cylinder 119. In this particular embodiment, the skirt 39 has a lower segment 42 that conforms to the shape of the upper part of the intermediate section 123 so as to match the upper extremity of the intermediate part 123 to provide continuity in the aesthetic appearance. It is to be noted that the skirt terminates at a location above the axle.

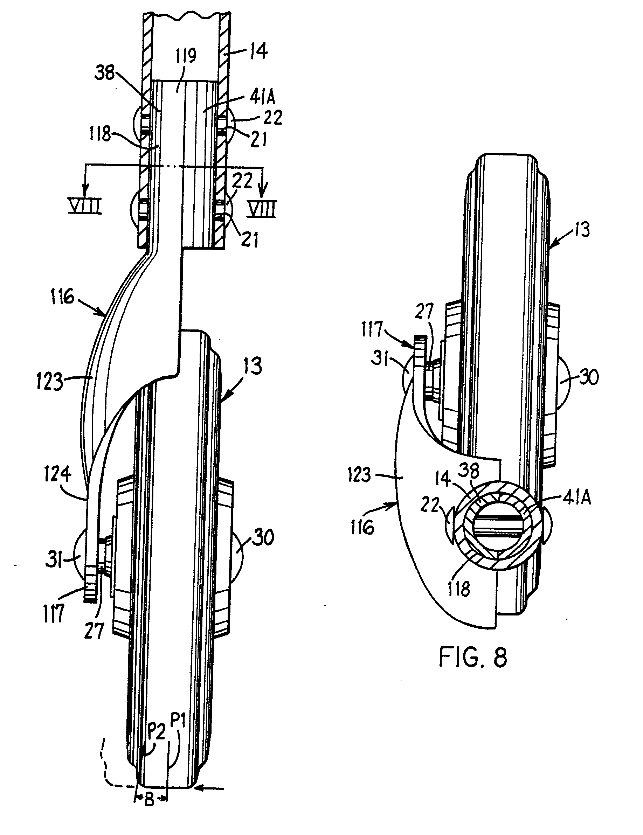

Alternate embodiment of Figures 7—8

The embodiment of Figures 7 and 8 is generally the same as the embodiment of Figures 5 and 6 and, as a result, the same reference numerals have been utilized as were utilized in the description of Figures 5 and 6 which, in some instances, may have the suffix "A" added thereto to indicate the slight modification. The lower portion 42 of the skirt member 39 has been eliminated in this embodiment leaving only the semicylindrical section 41A which, when mated with the semicylindrical portion 38 of the bracket member 116 forms a cylinder 119.

The wheel bracket mounting structure of Figures 7 and 8 were subjected to the same testing discussed above, and using a 12,7 cm (5 inch) diameter wheel, with the following results:

| F in N (pounds) | B deflections in mm (inches) |
|---|---|
| 44,48 (10) | 5,72 ( ,225) |
| 88,96 (20) | 13,59 ( ,535) |
| 133,44 (30) | 19,69 ( ,775) |
| 177,92 (40) | 26,96 (1,060) |
| 222,4 (50) | 35,05 (1,380) |
| 266,88 (60) | 42,93 (1,690) |
| 311,36 (70) | 49,91 (1,965) |
| 333,6 (75) | 56,26 (2,215) |

It was observed that the primary difference between the amount of flexing for the embodiment of Figures 7 and 8 and the embodiment of Figures 2 to 4 was due to a thinner gauge material being utilized for this embodiment. That is, the embodiment of Figures 2 to 4 utilized an 3,05 mm material (,120 inches thick) as compared to a 2,64 mm material being utilized in this embodiment (,104 inches thick). This particular construction seemed to withstand the severe loading up to at least 333,6 N (75 pounds) without any permanent plastic deformation of the metal.

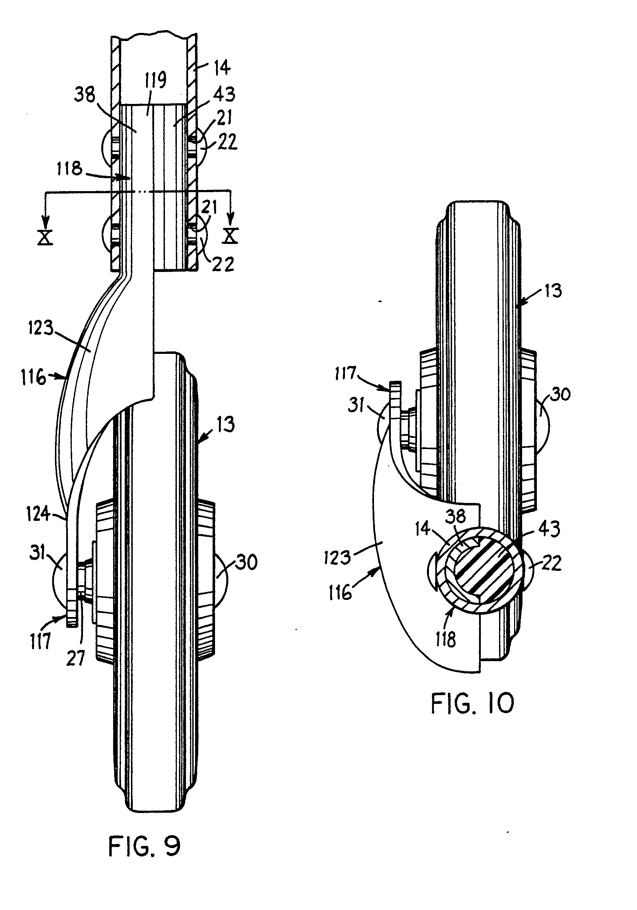

Alternate embodiment of Figures 9—10

The embodiment of Figures 9—10 is closely similar to the embodiment of Figures 7 and 8 described above and, as a result, the same reference numerals have been utilized to designate the identical components. That is, the bracket member 116 is identical to the bracket member 116 in this particular embodiment. The primary difference between this embodiment and the embodiment of Figures 7 and 8 is the provision of an elastomeric member 43 which is shaped to fill the interior of the C-shaped contour of the semicylindrical portion 38 of the stem section 118 as well as fill out the remainder of the interior of the tubular segment 14. Thus, the outer extremity of both the semicylindrical segment 38 and the elastomeric member 43 is cylindrical to thereby define the cylinder 119. Appropriate openings are provided through the elastomeric member 43 to facilitate the rivets 22 securing the bracket member 16 and cooperating elastomeric member 43 to the interior of the tubular segment 14.

The elastomeric member in this embodiment, as in all other embodiments described herein, is made of a polyurethane having a hardness value in the range of 75 Shore A to 55 Shore D Durometer.

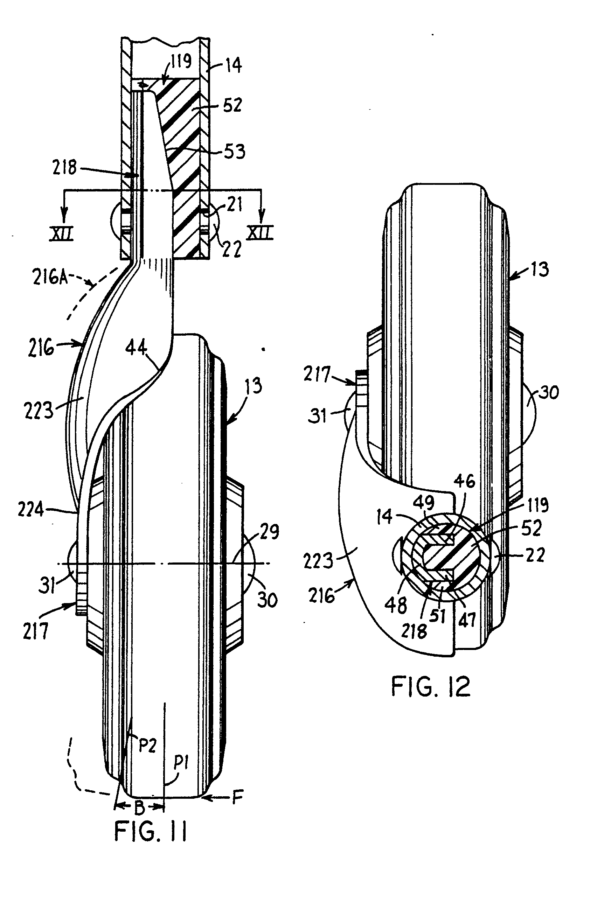

Alternate embodiment of Figures 11—12

The embodiment of Figures 11 and 12 is similar to the embodiment of Figures 9 and 10. Therefore, the same reference numeral will be used to designate similar or identical structure described above in relation to Figures 2 to 4 but with a "2" prefix added thereto. There is a slight variation, however, in the specific shape of the bracket member 216, particularly the shape of the intermediate segment 223 wherein a rounded corner at 44 is provided whereas in the embodiment of Figures 9 and 10 a rather sharp corner is provided. In addition, the stem section 218 is shaped slightly differently from the embodiment of Figures 9 and 10. In this particular embodiment, the stem segment 218 is somewhat C-shaped having a pair of parallel legs 46 and 47 which extend in parallel planes which are both parallel to an upright vertical plane extending through the axis 29. The legs 46 and 47 are connected by a bight section having an exterior surface that is arcuate and corresponds to the arcuate contour of the interior of the tubular segment 14. Further, a space 49 is provided between the exterior of the leg 46 and the interior of the tubular segment 14 as well as a space 51 between the exterior of the leg 47 and the interior of the tubular segment 14 as best illustrated in Figure 12. An elastomeric member 52 is provided and is adapted to fill the space between the parallel legs 46 and 47 as well as the spaces 49 and 51 and, further, the remainder portion of the interior of the tubular segment 14 to define a cylinder 119. The exterior surface of the cylinder 119 is composed of two parts, namely, the exterior surface of the bight 48 as well as the exterior surface of the elastomeric member 52 as best illustrated in Figure 12.

The elastomeric member in this embodiment, as in all other embodiments described herein, is made of a polyurethane having a hardness value in the range of 75 Shore A to 55 Shore D Durometer.

In this particular embodiment, the bight section 48 is provided with a single hole therethrough which is aligned with the single set of aligned holes 21 provided in the tubular segment 14 so that a single rivet 22 effects a securing of the stem section 218 to the tubular segment 14. In this particular embodiment, the hole through the bight 48 is slightly larger than the diameter of the central portion of the rivet so that the entirety of the bracket member 216 will move relative to the tubular segment 14 against the resilient urging of the elastomeric member 52. It is to be noted that each of the legs 46 and 47 each have an edge 53 thereon which is inclined to the vertical as best illustrated in Figure 11. The edge effectively constitutes a removal of material from the legs 46 and 47 to facilitate further relative movement between the bracket member 216 and the tubular segment 14. That is, the bracket member 216 is movable, for example, to the broken line position illustrated in Figure 11 about an axis oriented perpendicular to the axis of the rivet 22 against the resilient urging of the elastomeric member 52.

The wheel bracket mounting structure of Figures 11 and 12 was subjected to the same type of testing as was the previously discussed embodiments of Figures 2 to 4 and Figures 7 and 8. The following are the test results derived from the test. A 12,7 cm (5 inch) diameter wheel was used in this testing.

6

| F in N (pounds) | B deflection in mm (inches) |
|---|---|
| 44,48 (10) | 9,14 ( ,360) |
| 88,96 (20) | 17,65 ( ,695) |
| 133,44 (30) | 24,51 ( ,965) |
| 177,92 (40) | 33,66 (1,325) |
| 222,4 (50) | 44,89 (1,610) |
| 266,88 (60) | 52,07 (2,050) |
| 311,36 (70) | 60,66 (2,388) |
| 355,84 (80) | 71,12 (2,800) |
| 378,08 (85) | 76,2 (3,000) |
| 444,8 (100) | 114,3 (4,500) |

Additional force was applied to the wheel until a maximum deflection of 12,7 mm (5 inches) was achieved and without any plastic deformation of the bracket.

The material of the bracket member 216 was 11-gauge steel. The spacing between the exterior surfaces of the parallel legs 46 and 47 was 12,7 mm (,500 inches) and the distance from the midportion of the exterior surface of the bight 48 to the axially facing edges of the legs 46 and 47 adjacent the juncture between the stem section 218 and the intermediate section 223 was 10,8 mm (,425 inches). The interior diameter of the tubular segment was the same as the previous embodiments, namely, 18,29 mm (,720 inches).

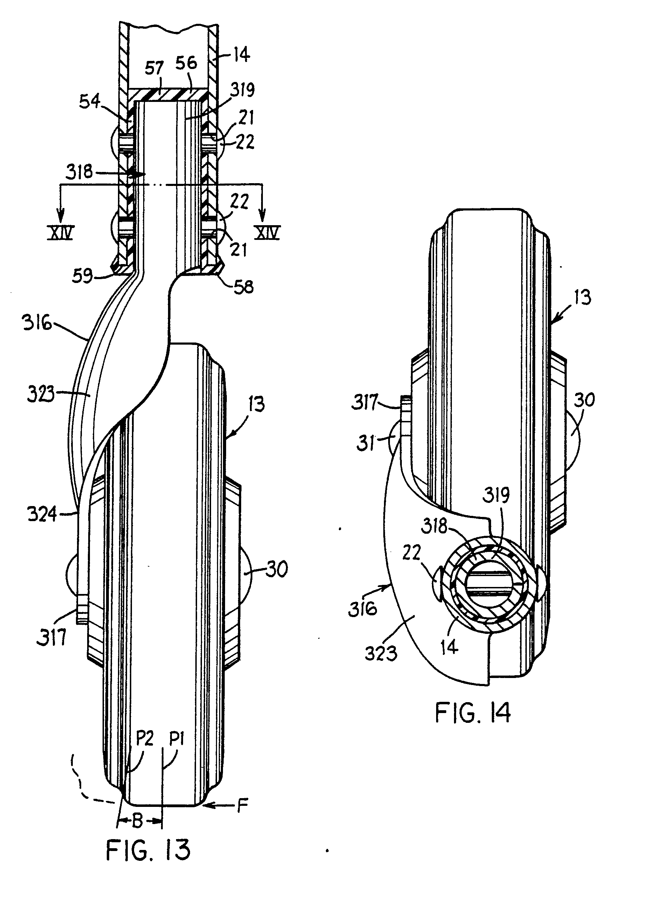

Alternate embodiment of Figures 13—14

The embodiment of Figures 13 and 14 is similar in many respects to the embodiment of Figures 2 to 4 and, as a result, the same reference numerals will be used to designate similar or identical structure described in relation to Figures 2 to 4 but with a "3" prefix added thereto. The bracket member 316 has a cylindrically shaped stem section 318 separated from the axle mounting segment 317 by an intermediate segment 323. The cylinder 319 of the stem section 318 has a diameter that is less than the interior diameter of the tubular segment 14 thereby defining a space 54 therebetween. An elastomeric sleeve is provided and fills the space 54 between the exterior surface of the cylinder 319 and the interior surface of the tubular segment 14. In this particular embodiment, the sleeve 56 has a cylindrical body part and a closed end section 57. For decorative purposes, a radially outwardly extending annular lip 58 is provided and grips over and covers the lower annular edge 59 of the tubular segment 14. A pair of vertically spaced and parallel openings are provided in the cylinder 319 as well as in the wall of the tubular segment 14 and the cylindrical shell portion of the elastomeric sleeve 56 so as to facilitate the reception therein of rivets 22 to effect a securement of the stem section 318 to the tubular segment 14.

The elastomeric member in this embodiment, as in all other embodiments described herein, is made of a polyurethane having a hardness value in the range of 75 Shore A to 55 Shore D Durometer.

As with the embodiments of Figures 2 to 4, Figures 7 and 8 and Figures 11 and 12, this embodiment was also subjected to a test wherein a force was applied to the tread of the wheel 13 in direction of the arrow F illustrated in Figure 13. The amount of deflection B was measured and the following are the results obtained from such testing.

| F in N (pounds) | B deflection in mm (inches) |
|---|---|
| 44,48 (10) | 3,3 ( ,130) |
| 88,96 (20) | 6,6 ( ,260) |
| 133,44 (30) | 9,4 ( ,370) |
| 177,92 (40) | 11,18 ( ,440) |
| 222,4 (50) | 14,22 ( ,560) |
| 266,88 (60) | 18,29 ( ,720) |
| 311,36 (70) | 21,59 ( ,850) |
| 355,84 (80) | 26,16 (1,030) |
| 400,32 (90) | 29,21 (1,150) |
| 444,8 (100) | 35,05 (1,380) |
| 622,72 (140) | 63,5 (2,500) |

The internal diameter of the tubular segment 14 in this particular embodiment was 21,1 mm (,830 inches). The interior diameter of the cylindrical sleeve portion of the elastomeric sleeve 56 was 18,29 mm (,720 inches) and the outer diameter thereof was 21,08 mm (,830 inches). The material of the bracket member 316 was 3,05 mm thick steel. Further, and with all testing discussed herein, the wheel 13 was 12,7 cm (5 inches) in diameter.

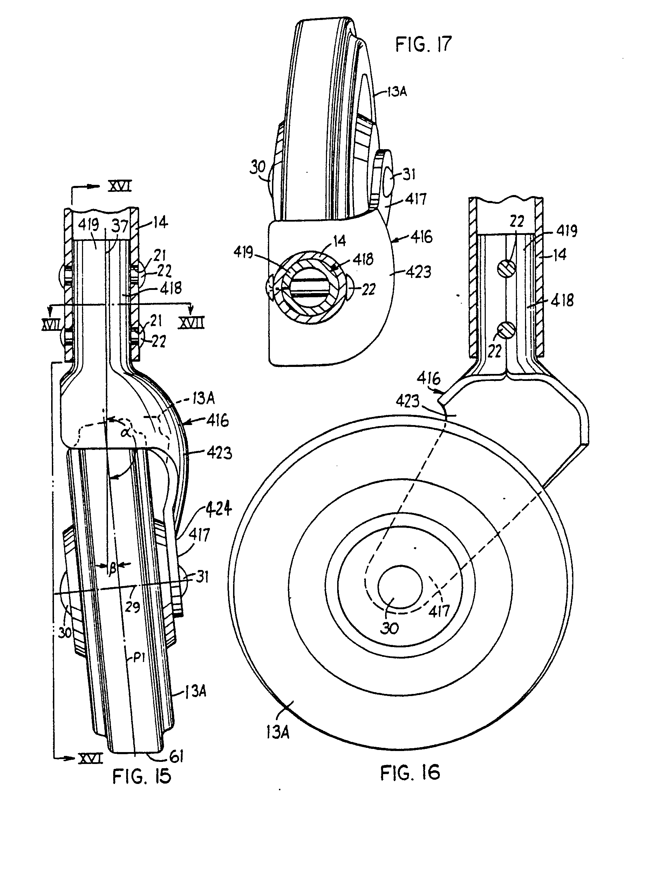

Alternate embodiment of Figures 15—17

The embodiment of Figures 15 to 17 is similar in many respects to the embodiment of Figures 2 to 4, and, as a result, the same reference numerals will be used to designate similar or identical structure described in relation to Figures 2 to 4 but with a "4" prefix added thereto. That is, the bracket member 416 has a cylindrical stem section 418 and a flat, platelike, axle mounting section 417 separated by a bulbously contoured intermediate section 423. The primary differences between this embodiment and the embodiment of Figures 2 to 4 is the orientation of the flat, platelike, axle mounting section 417 in a plane which is inclined to the vertical. In this particular embodiment, the plane of the flat, platelike, axle mounting section 417 is, as with the previously discussed embodiments, parallel to the plane of rotation of the wheel 13A. The axis 29 of the axle for the wheel extends perpendicular to the plane of the axle mounting section 417. The plane of rotation P1 for the wheel 13A is inclined to the vertical by an angle β equal to 3° to 5°. The tread of the wheel 13A is configured so that the entire width of the tread 61 engages the ground even though the plane of rotation P1 thereof is inclined to the vertical by the aforementioned angle β. In all other respects, the wheel 13A is identical to the wheel 13 disclosed in the embodiment relating to Figures 2 to 4.

Another feature that is different in this embodiment is that the bracket member 416 is located on the outside of the wheel when it is mounted on a wheeled vehicle, such as the wheeled vehicle 10 illustrated in Figure 1. In the previously discussed embodiments, the bracket member 16 was, in each instance, mounted on the inside of the wheel. There is provided a bracket member 416 capable of supporting the wheel on the inside thereof so that the exterior of the wheel supported vehicle will appear the same as conventional rear brackets except that the bracket member 416 is comprised of a single piece of steel. In this particular embodiment, the axis 37 of the cylinder 419 defined by the stem section 418 is contained in a plane which extends parallel to the longitudinal axis of the wheeled vehicle 10 and is oriented in an obtuse angle α relative to the plane of rotation P1 for the wheel 13A. In this particular embodiment, the angle α is in the range of 175° to 177°, namely, the complement to the angle β. The purpose behind inclining the plane of rotation P1 for the wheel 13A to the vertical is to provide additional space between the mutually adjacent portions of the tread 61 and the surface of the bracket member 16. Since relative movement capability exists between the wheel 13A and the bracket member 16 due to the particular bearing support in the wheel 13A, sufficient space has to be provided to enable the wheel to move relative to the bracket member 416 without causing the tread 61 to scrub against the inside surface portion of the intermediate section 423 when the wheel is flexed to the broken line position shown in Figure 15.

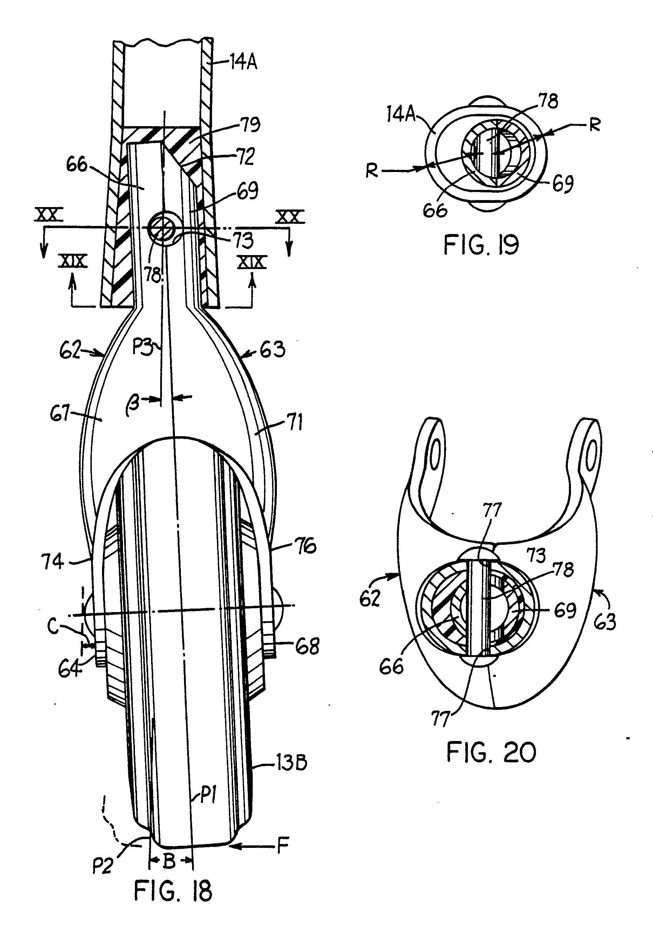

Alternate embodiment of Figures 18—20

In certain instances, it may be desirable to support the axle rotatably supporting a wheel from both ends thereof. Further, a particular customer may demand this type of support for the wheel even though the previously discussed embodiments will adequately tolerate most abuses rendered to a wheel bracket mounting structure. However, as explained above and with respect to the structure disclosed in application Serial No. 84 104480.3, insufficient flex was possible between the wheel bracket mounting structure and the tubular segment before plastic deformation occurred in the structure of the bracket members. It will be recognized in the earlier filed application Serial No. 84 104480.3 that an elastomeric sleeve could be placed around the stem section to enhance the relative movement characteristic between the bracket members and the tubular segment. In this particular instance, the following test results occurred when a force was applied to the tread of a wheel shown in Figure 12 in the aforementioned application to cause a flexing of the plane of rotation P1 to an alternate position P2 thereof. A 12,7 cm (5 inch) diameter wheel was used on this testing.

| F in N (pounds) | B deflection in mm (inches) |
|---|---|
| 44,48 (10) | 7,75 ( ,305) |
| 88,96 (20) | 11,73 ( ,462) |
| 133,44 (30) | 14,33 ( ,594) |
| 177,92 (40) | 17,78 ( ,700) |
| 222,4 (50) | 20,57 ( ,810) |
| 266,88 (60) | 23,19 ( ,913) |
| 311,36 (70) | 25,78 (1,015) |
| 355,84 (80) | 27,69 (1,090) |
| 400,32 (90) | 29,97 (1,180) |
| 444,8 (100) | 32,51 (1,280) |
| 489,28 (110) | 35,05 (1,380) |
| 533,76 (120) | 37,29 (1,468) |

In this test, the material of the bracket members was 11-gauge steel and the diameter of the stem section was 18,3 mm (,720 inches) and the exterior diameter of the elastomeric sleeve was 21,1 mm (,830 inches), namely, the same as the internal diameter of the tubular segment 14. This particular construction has been satisfactory for most uses discovered to date. However, there are certain applications wherein larger forces must be absorbed in order to prevent plastic deformation of the bracket members. Figures 18 to 20 represent an improvement over the earlier structures disclosed in the aforementioned application Serial No. 84 104480.3.

Referring now more specifically to the structure of Figures 18 to 20, the wheel bracket mounting structure consists of a pair of bracket members 62 and 63 which are the mirror image of each other. The bracket member 62 has a flat, platelike, axle mounting section 64 and a semicylindrically shaped stem section 66 separated from the axle mounting section by a bulbously contoured intermediate section 67. The bracket 63 also has a flat, platelike, axle mounting section 68 as well as a semicylindrically shaped stem section 69 separated from the axle mounting section by a bulbously contoured intermediate section 71. In this particular embodiment, the stem section 69 has a section thereof adjacent the upper edge which is removed to form an inclined edge 72. In addition, a single opening 73 is provided in the stem sections 66 and 69, the axis of which extends in an upright vertical plane parallel to the longitudinal axis of a wheeled vehicle on which the wheel bracket mounting structure is secured. In this particular embodiment, the plane is identified by the reference character P3 in Figure 18.

As with the previously discussed embodiments, the intermediate sections 67 and 71 of both bracket members 62 and 63, respectively, have a greater resistance to lateral flex than the junctures 74 and 76, respectively, between the aforesaid intermediate sections 67 and 71 and the associated axle mounting sections 64 and 68. However, an axle is secured to and extends between the axle mounting sections to eliminate the elastic flex at the junctures 74 and 76.

The wheel 13B oriented between the bracket members 62 and 63 can be of any construction including wheels having a hollow axle as opposed to a solid state. One such wheel employing a hollow axle is disclosed in U.S. Patent No. 4 072 373.

An opening 77, smaller in diameter than the opening 73, is provided in diametrically opposite sides of the tubular segment 14A of the base frame of a wheeled vehicle, the axis of which also extends parallel to the plane P3. In the embodiments of Figures 2 to 17 discussed above, the axis of the rivets all extended perpendicular to the plane P1, namely, a plane corresponding to the aforementioned plane P3. Prior to insertion of the stem sections 66 and 69 into the interior of the tubular segment 14A, the lower end of the tubular segment 14A is enlarged as best illustrated in Figure 19. That is, the lower end of the tubular segment 14A has a generally elliptical shape wherein the left and right halves of the opening have a radius R with the centerpoints of each radii being spaced apart approximately the diameter of the central portion of the rivet 78 as best illustrated in Figure 19. During assembly of the bracket members 62 and 63 to the tubular segment 14, the opening 73 is aligned with the opening 77 and a rivet 78 is inserted therein. The enlarged opposite ends on the rivet 78 are best illustrated in Figure 20. An elastomeric sleeve 79 is provided and encircles the stem sections 66 and 69. In this particular embodiment, the plane of rotation P1 of the wheel 13B is oriented at an angle $\beta$ relative to an upright vertical plane extending parallel to the longitudinal axis of a wheeled vehicle on which such wheel is mounted. In this particular embodiment, the angle $\beta$ is oriented in the range of 3° to 5° from the vertical as illustrated in Figure 18. The elastomeric sleeve 79 occupies the space between the peripheral surface of the stem sections 66 and 69 and the internal surface of the tubular segment 14A. Since the stem sections 66 and 69 forming a cylinder are inclined to the vertical, the elastomeric sleeve 79 has a special shape to fill the space between the exterior cylindrical surface formed by the stem sections 66 and 69 and the interior of the enlarged lower segment of the tubular segment 14A. As illustrated in Figure 19, the elastomeric sleeve 79 will have a uniform thickness around the stem section 69 but a varying and enlarged thickness around the stem section 66.

The elastomeric member in this embodiment, as in all other embodiments described herein, is made of a polyurethane having a hardness value in the range of 75 Shore A to 55 Shore D Durometer.

The embodiment of Figures 18 to 20 was subjected to a test wherein a force was applied to the tread in the direction of the arrow F illustrated in Figure 18. The deflection of the plane of rotation from the position P1 to alternate positions illustrated by the plane P2 was measured. In addition, the amount of lateral movement C of the bracket members 62 and 63, particularly, the axle mounting sections 64 and 68, were noted. The following test results were obtained. A 12,7 cm (5 inch) diameter wheel was used in this testing.

| F in N (pounds) | B deflection in mm (inches) | C in mm (inches) |
|---|---|---|
| 44,48 (10) | 2,54 ( ,100) | 1,78 ( ,070) |
| 66,72 (15) | 5,08 ( ,200) | 3,81 ( ,150) |
| 88,96 (20) | 8,13 ( ,320) | 5,84 ( ,230) |
| 111,2 (25) | 11,81 ( ,465) | — |
| 133,44 (30) | 17,15 ( ,675) | — |
| 155,68 (35) | 21,84 ( ,860) | 6,99 ( ,275) |
| 177,92 (40) | 24,64 ( ,970) | 9,02 ( ,355) |
| 200,16 (45) | 27,38 (1,078) | 11,68 ( ,460) |
| 222,4 (50) | 30,43 (1,198) | 13,21 ( ,520) |
| 244,64 (55) | 32,39 (1,275) | 14,61 ( ,575) |
| 266,88 (60) | 34,42 (1,355) | 16,0 ( ,630) |
| 289,12 (65) | 36,32 (1,430) | 17,4 ( ,685) |
| 311,36 (70) | 37,47 (1,475) | 18,21 ( ,717) |
| 333,6 (75) | 38,91 (1,532) | 19,23 ( ,757) |
| 355,84 (80) | 41,17 (1,621) | 21,08 ( ,830) |
| 378,08 (85) | 43,05 (1,695) | 21,84 ( ,860) |
| 400,32 (90) | 44,7 (1,760) | 22,35 ( ,880) |
| 422,56 (95) | 46,48 (1,830) | 23,88 ( ,940) |
| 444,8 (100) | 50,04 (1,970) | — |
| 489,28 (110) | 62,23 (2,045) | — |
| 533,76 (120) | 54,74 (2,155) | — |
| 578,24 (130) | 59,44 (2,340) | — |
| 622,72 (140) | 63,5 (2,500) | — |

The material of the bracket members 62 and 63 comprised 2,64 mm thick steel and the wheel 13B was 12,7 cm (5 inches) in diameter. Further, the specific angle of the plane P1 relative to the vertical plane P3 at the start of the test was 3°. Further, the upper section of the tubular segment 14A had an interior diameter of 21,1 mm (,830 inches). The lower internal dimension of the tubular segment 14A, from left to right in Figure 19, was 26,2 mm (1,030 inches). In other words, there was a 2,54 mm (,100 inch) flare on each side of the tubular segment from the central axis of the tubular segment 14A. Thus, the amount of lateral flex achieved by the embodiment of Figures 18 to 20 was more than twice that amount obtained by the Figure 2 structure and more than 50 percent that amount obtained by the Figure 12 structure disclosed in the aforementioned earlier filed application Serial No. 84 104480.3 and as evidenced by the data presented hereinabove.

## Claims

1. A wheel bracket mounting structure, comprising: at least an elongated bracket member (16, 116, 216, 316, 416, 62, 63) including an axle mounting section (17, 117, 217, 317, 417, 64, 68) and a stem mounting section (18, 118, 218, 318, 418, 66, 69) at generally opposite ends thereof, said axle mounting section including a generally flat, platelike portion (17, 117, 217, 317, 417, 64, 68) vertically and horizontally offset from said stem mounting section, said stem mounting section including an elongate stem means (19, 119, 219, 319, 419, 66, 69) generally arcuate in cross-section adapted to be connected to a support member (14, 14a) on a wheeled vehicle (10), said bracket member further including a bulbously shaped intermediate section (23, 123, 223, 323, 423, 67, 71) between said flat, platelike portion and said stem mounting section for providing a smooth transition therebetween for resisting lateral elastic flexing so that said stem mounting section and said bulbously shaped intermediate section are resistant to relative lateral elastic flexing, characterized in that said stem mounting section (18, etc) being unitary with the intermediate section (23, etc.) and being adapted for direct non pivotable attachment to said support member (14, 14a), and in that a region (24, 124, 224, 324, 424, 74, 76) at the juncture between said flat, platelike portion (17, etc.) and said bulbously shaped intermediate section (23, etc.) remote from said stem mounting section (18, etc.) is elastically flexible relative to said stem section (18, etc.) and to said intermediate section (23, etc.) which has a greater resistance to lateral elastic flex than said juncture region (24, etc.).

2. A wheel bracket mounting structure according to Claim 1, including an axle member (27) rigidly secured and cantilevered to said flat, platelike portion (17, 117, 217, 317, 417), the axis (29) of said axle member extending generally perpendicularly to the plane of said flat, platelike portion.

3. The wheel bracket mounting structure according to Claim 2, including a wheel (13) and bearing means rotatably supporting said wheel on said axle member (27) and wherein stop means (30) are provided on said axle member (27) for preventing axial movement of said wheel (13) in a direction away from said flat, platelike portion (17, 117, 217, 317, 417) whereby said axle is movable with said flat, platelike portion during said elastically flex movement thereof.

4. The wheel bracket mounting structure according to Claim 1, wherein said bracket member (16, 116, 216, 316, 416, 62, 63) is made of a single piece of uniformly thick, high carbon steel, heat treated and drawn to a Rockwell hardness in the range of 45 to 55 Rockwell C.

5. The wheel bracket mounting structure according to Claim 1, wherein when said stem means (19, 119,

10

219, 319) is connected to a wheeled vehicle (10), said platelike portion (17, 117, 217, 317) being oriented in a vertical plane parallel to the longitudinal axis (37) of said stem means.

6. The wheel bracket mounting structure according to Claim 1, wherein when said stem means (419, 66, 69) is connected to a wheeled vehicle, said platelike portion (417, 64, 68) being oriented in a plane which is inclined to the Vertical and out of parallel relationship to the longitudinal axis (37) of said stem means.

7. The wheel bracket mounting structure according to Claim 2, wherein said intermediate section (23, 123, 223, 323, 423, 67, 71) resists elastic flex in a direction radial to said axle member (27).

8. The wheel bracket mounting structure according to Claim 2 and 5, wherein said axle member (27) orientates a central plane (P1) of said wheel (13) rotatably mounted thereon in alignment with the longitudinal axis (37) of said stem means (17, 117, 217, 317, 417).

9. The wheel bracket mounting structure according to Claim 2 and 6, wherein said axle member orientates a central plane (P1) of said wheel (13A) rotatably mounted thereon at an obtuse angle (a) greater than 170° but less than 180° to a vertically aligned plane containing said longitudinal axis (37) of said stem means (419) and oriented parallel to the rolling direction of said wheel about said axis (29) of said axle member.

10. The wheel bracket mounting structure according to Claim 9, wherein said obtuse angle (a) is in the range of 175° to 177°.

11. The wheel bracket mounting structure according to Claim 1, wherein said stem means (19, 319, 419) includes the material of said bracket member (16, 316, 419) bent into a closed cylindrical form.

12. The wheel bracket mounting structure according to Claim 11, wherein said stem means (319) includes an elastomeric sleeve (56) encircling said closed, cylindrical form.

13. The wheel bracket mounting structure according to Claim 1, wherein said stem (119) means includes the material of said bracket member (116, 62, 63) bent into a first semicylindrical segment (38, 66) and a separate and second semicylindrical segment (41, 69) juxtaposed said first semicylindrical segment to thereby define a cylinder.

14. The wheel bracket mounting structure according to Claim 13, wherein said second semicylindrical segment (41) includes means defining a skirt (39) integrally secured thereto and having a shape mirror imaging at least a portion of said intermediate section (123) adjacent said stem mounting section (118).

15. The wheel bracket mounting structure according to Claim 1, wherein said stem means (119) includes the material of said bracket member (116) bent into a semicylindrical segment (38) and an elastomeric member (43) having a first portion filling the space between the legs of said semicylindrical segment and a second portion integral with said first portion having a shape conforming to the shape of said semicylindrical segment to thereby form a cylinder.

16. The wheel bracket mounting structure according to Claim 1, wherein said stem means includes the material of said bracket member (216) bent into a C shape, the legs (46, 47) of which lie in spaced and parallel planes and an elastomeric member (52) having a first portion filling the space between said legs of said C-shaped member and a second portion integral with said first portion having a shape conforming to the shape of a portion of said C-shaped member to at least define a cylinder.

17. The wheel bracket mounting structure according to Claim 16, wherein the upper region (53) of the vertically extending edges of said legs (46, 47) are inclined to the vertical toward a bight portion of said C-shaped member extending between said parallel legs.

18. The wheel bracket mounting structure according to Claim 1, including a further elongated bracket member (63) that is a mirror image to the first mentioned bracket (62) member, said bracket members (62, 63) each having a semicylindrical stem mounting section (66, 69) and a bulbously shaped intermediate section (67, 71) providing said smooth transition between said stem mounting section and said axle mounting section (64, 68), said bracket members being oriented side-by-side so that said semicylindrical stem mounting sections define a cylinder and said axle mounting sections are horizontally spaced from each other, an axle fixedly connected to and extending between said axle mounting sections and a wheel (13B) rotatably supported on said axle.

19. The wheel bracket mounting structure according to Claim 18, wherein said axle and its connection to said axle supporting sections (64, 68) eliminates the elastic flex at said juncture regions (74, 76).

20. The wheel bracket mounting structure according to Claim 19, wherein an elastomeric member (79) encircles said cylinder (66, 69) and is received in a downwardly opening and vertically oriented tubular segment (14A) on a wheeled vehicle, and wherein pivot means (73, 78) are provided for pivotally securing said bracket member (62, 63) to said tubular segment, said elastomeric member yieldably resisting pivotal movement of said bracket members.

21. The wheel bracket mounting structure according to Claim 20, wherein said pivot means includes an axis (78) which extends parallel to a plane of rotation (P1) of said wheel (13B).

22. The wheel bracket mounting structure according to Claim 20, wherein the lower end portion of said tubular segment (14A) is flared outwardly in directions lateral to a plane of rotation (P1) of said wheel; and wherein said plane of rotation of said wheel and the axis of said cylinder (66, 69) are oriented at an acute angle to the vertical; and

wherein said elastomeric member (79) is formed to occupy the space between said cylinder and the internal wall of said flared part of said tubular segment.

23. A method of making a wheel bracket mounting structure, comprising the steps of stamping out

**0 138 067**

from a metal plate an elongate bracket member (16, 116, 216, 316, 416, 62, 63), forming at one end thereof a central section (18, 118, 218, 318, 418, 66, 69) and forming a flat platelike axle mounting section (17, 117, 217, 317, 417, 64, 68) at the other end thereof, forming an intermediate section (23, 123, 223, 323, 423, 67, 71) between said central section and said axle mounting section, said forming of said intermediate section including the step of bending said metal laterally of said central section to orient said axle mounting section horizontally and vertically offset from said central section and the step of forming a bulbous contour thereon having the centrepoints of all radii of curvature located below said arcuate stem section characterized in forming at the said one end of the bracket an arcuate stem section (18, etc.) and forming a juncture region (24, 124, 224, 324, 424, 74, 76) between said intermediate section (23, etc.) and said axle mounting section (17, etc.) which has a lesser resistance to lateral flex than said intermediate section (23, etc.) and said axle mounting section (17, etc.).

24. The method according to Claim 23, including the step of assembling an axle (27) to said axle mounting section (17, 117, 217, 317, 417, 64, 68) said step including the punching of a noncircular opening (26) in said axle mounting section and placing an end of said axle (27) therein so that a portion thereof extends from the opposite side, upsetting said end so that the material of said end flows to fill said noncircular opening thereby preventing relative movement between said axle and said axle mounting section.

25. The method according to Claim 24, including the step of placing a wheel (13, 13A, 13B) on said axle (27) and forming a stop (30) on the end of said axle remote from said axle mounting section to limit axial movement of said wheel.

26. The method according to Claim 23, including the step of heating said bracket member and drawing it so as to impart thereto a Rockwell hardness in the range of 45 to 55 RC.

**Patentansprüche**

1. Radkonsolenbefestigungsvorrichtung, umfassend: zumindest einen länglichen Konsolenbauteil (16, 116, 216, 316, 416, 62, 63), einschließlich einer Achsenbefestigungssektion (17, 117, 217, 317, 417, 64, 68) · und einer Schaftbefestigungssektion (18, 118, 218, 318, 418, 66, 69) an im allgemeinen entgegengesetzten Enden davon, wobei die Achsenbefestigungssektion ein im allgemeinen flaches, plattenartiges Teilstück (17, 117, 217, 317, 417, 64, 68) einschließt, von der Schaftbefestigungssektion vertikal und horizontal abgesetzt, wobei die Schaftbefestigungssektion längliche Schaftmittel (19, 119, 219, 319, 419, 66, 69) einschließt, im allgemeinen im Querschnitt gewölbt, geeignet, mit einem Stützbauteil (14, 14a) an einem mit Rädern versehenen Fahrzeug (10) verbunden zu werden, wobei der Konsolbauteil ferner eine birnenförmige Zwischensektion (23, 123, 223, 323, 423, 67, 71) zwischen dem flachen, plattenartigen Teilstück und der Schaftbefestigungssektion einschließt, um einen glatten, sanften Übergang dazwischen vorzusehen, um seitlichem, elastischen Biegen zu widerstehen, so daß die Schaftbefestigungssektion und die birnenförmige Zwischensektion widerstandsfähig sind gegenüber relativem, seitlichen, elastischen Biegen, dadurch gekennzeichnet, daß die Schaftbefestigungssektion (18 etc.) unitär mit der Zwischensektion (23 etc.) vorgesehen ist und geeignet ist zur direkten nichtschwenkbaren Anfügung an den Stützbauteil (14, 14a), und daß eine Region (24, 124, 224, 324, 424, 74, 76) an der Verbindungsstelle zwischen dem flachen, plattenartigen Teilstück (17 etc.) und der birnenförmigen Zwischensektion (23 etc.), entfernt von der Schaftbefestigungssektion (18 etc.), elastisch flexibel ist relativ zu der Schaftsektion (18 etc.) und zu der Zwischensektion (23 etc.), welche eine größere Widerstandsfähigkeit zu dem seitlichen, elastischen Biegen als die Verbindungsstellenregion (24 etc.) aufweist.

2. Radkonsolenbefestigungsvorrichtung nach Anspruch 1, gekennzeichnet durch einen Achsenbauteil (27), der an dem flachen, plattenartigen Teilstück (17, 117, 217, 317, 417) starr befestigt ist und auskragend vorgesehen ist, wobei sich die Achse (29) des Achsenbauteils im allgemeinen lotrecht zur Ebene des flachen, plattenartigen Teilstücks erstreckt.

3. Radkonsolenbefestigungsvorrichtung nach Anspruch 2, gekennzeichnet durch ein Rad (13) und Lagermittel, die das Rad an dem Achsenbauteil (27) drehbar abstützen, und wobei Anschlagmittel (30) an dem Achsenbauteil (27) vorgesehen sind, um Axialbewegung des Rades (13) in einer Richtung von dem flachen, plattenartigen Teilstück (17, 117, 217, 317, 417) weg zu verhindern, wobei die Achse mit dem flachen, plattenartigen Teilstück während der elastischen Biegebewegung davon bewegbar ist.

4. Radkonsolenbefestigungsvorrichtung nach Anspruch 1, dadurch gekennzeichnet, daß der Konsolenbauteil (16, 116, 216, 316, 416, 62, 63) aus einem einzigen Stück aus einheitlich dickem Flußstahl mit hohem Kohlenstoffgehalt, wärmebehandelt und auf eine Rockwellhärte im Bereich von 45 bis 55 Rockwell C gezogen, hergestellt ist.

5. Radkonsolenbefestigungsvorrichtung nach Anspruch 1, dadurch gekennzeichnet, daß, wenn die Schaftmittel (19, 119, 219, 319) mit einem mit Rädern versehenen Fahrzeug (10) verbunden werden, das plattenartige Teilstück (17, 117, 217, 317) in einer vertikalen Ebene parallel mit der Längsachse (37) der Schaftmittel ausgerichtet sind.

6. Radkonsolenbefestigungsvorrichtung nach Anspruch 1, dadurch gekennzeichnet, daß, wenn die Schaftmittel (419, 66, 69) mit einem mit Rädern versehenen Fahrzeug verbunden sind, das plattenartige Teilstück (417, 64, 68) in einer Ebene ausgerichtet ist, welche zu der Vertikalen geneigt ist und aus der Parallelbeziehung zu der Längsachse (37) der Schaftmittel heraus ist.

12

7. Radkonsolenbefestigungsvorrichtung nach Anspruch 2, dadurch gekennzeichnet, daß die Zwischensektion (23, 123, 223, 323, 423, 67, 71) einem elastischen Biegen in einer Richtung, radial zu dem Achsenbauteil (27), widersteht.

8. Radkonsolenbefestigungsvorrichtung nach Anspruch 2 und 5, dadurch gekennzeichnet, daß der Achsenbauteil (27) eine zentrale Ebene (P1) des Rades (13), drehbar daran montiert, in Ausrichtung mit der Längsachse (37) der Schaftmittel (17, 117, 217, 317, 417), ausrichtet.

9. Radkonsolenbefestigungsvorrichtung nach Anspruch 2 und 6, dadurch gekennzeichnet, daß der Achsenbauteil eine zentrale Ebene (P1) des Rades (13A), das daran drehbar montiert ist, unter einem stumpfen Winkel (α), größer als 170°, aber kleiner als 180°, zu einer vertikal ausgerichteten Ebene ausrichtet, welche die Längsachse (37) der Schaftmittel (419) enthält und parallel mit der Laufrichtung des Rades um die Achse (29) des Achsenbauteils ausgerichtet ist.

10. Radkonsolenbefestigungsvorrichtung nach Anspruch 9, dadurch gekennzeichnet, daß der stumpfe Winkel (α) in dem Bereich von 175° bis 177° vorgesehen ist.

11. Radkonsolenbefestigungsvorrichtung nach Anspruch 1, dadurch gekennzeichnet, daß die Schaftmittel (19, 319, 419) das Material des Konsolenbauteils (16, 316, 419), in eine geschlossene zylindrische Form gebogen, einschließen.

12. Radkonsolenbefestigungsvorrichtung nach Anspruch 11, dadurch gekennzeichnet, daß die Schaftmittel (319) eine elastomere Hülse (56) einschließen, welche die geschlossene, zylindrische Form umgibt.

13. Radkonsolenbefestigungsvorrichtung nach Anspruch 1, dadurch gekennzeichnet, daß die Schaftmittel (119) das Material des Konsolenbauteils (116, 62, 63) einschließen, in ein erstes semizylindrisches Segment (38, 66) und ein separates und zweites semizylindrisches Segment (41, 69) gebogen, das neben dem ersten semizylindrischen Segment angeordnet ist, um dadurch einen Zylinder zu bilden.

14. Radkonsolenbefestigungsvorrichtung nach Anspruch 13, dadurch gekennzeichnet, daß das zweite semizylindrische Segment (41) Mittel einschließt, die eine Ummantelung (39), integral daran gesichert, bilden, und mit einer Form, die zumindest für ein Teilstück der Zwischensektion (123), angrenzend an die Schaftbefestigungssektion (118), spiegelbildlich ist.

15. Radkonsolenbefestigungsvorrichtung nach Anspruch 1, dadurch gekennzeichnet, daß die Schaftmittel (119) das Material des Konsolenbauteils (116), in ein semizylindrisches Segment (38) gebogen, und einen elastomeren Bauteil (43) einschließen, mit einem ersten Teilstück, das den Raum zwischen den Schenkeln des semizylindrischen Segmentes und einem zweiten Teilstück, integral mit dem ersten Teilstück, füllt, mit einer Form, die der Form des semizylindrischen Segmentes entspricht, um dadurch einen Zylinder zu bilden.

16. Radkonsolenbefestigungsvorrichtung nach Anspruch 1, dadurch gekennzeichnet, daß die Schaftmittel das Material des Konsolenbauteils (216), in eine C-Form gebogen, einschließen, wobei die Schenkel (46, 47) davon in mit Abstand angeordneten und parallen Ebenen liegen, und einen elastomeren Bauteil (52), mit einem ersten Teilstück, das den Raum zwischen den Schenkeln des C-förmigen Bauteils und einem zweiten Teilstück, integral mit dem ersten Teilstück, füllt, mit einer Form, die der Form eines Teilstücks des C-förmigen Bauteils entspricht, um zumindest einen Zylinder zu bilden.

17. Radkonsolenbefestigungsvorrichtung nach Anspruch 16, dadurch gekennzeichnet, daß die obere Region (53) der sich vertikal erstreckenden Kanten der Schenkel (46, 47) nach der Vertikalen hin geneigt ist, auf ein Einbuchtungsteilstück des C-förmigen Bauteils zu, der sich zwischen den parallelen Schenkeln erstreckt.

18. Radkonsolenbefestigungsvorrichtung nach Anspruch 1, gekennzeichnet durch einen weiteren länglichen Konsolenbauteil (63), bei dem es sich um ein Spiegelbild in bezug auf den erstgenannten Konsolenbauteil (62) handelt, wobei die Konsolenbauteile (62, 63) jeweils eine semizylindrische Schaftbefestigungssektion (66, 69) und eine birnenförmige Zwischensektion (67, 71) aufweisen, welche den glatten, sanften Übergang zwischen der Schaftbefestigungssektion und der Achsenbefestigungssektion (64, 68) vorsehen, wobei die Konsolenbauteile Seite an Seite ausgerichtet sind, so daß die semizylindrischen Schaftbefestigungssektionen einen Zylinder bilden und die Achsenbefestigungssektionen horizontal mit Abstand voneinander angeordnet sind, eine Achse, die fest mit den Achsenbefestigungssektionen verbunden ist und sich zwischen diesen erstreckt, und ein Rad (13B), das auf der Achse drehbar abgestützt ist.

19. Radkonsolenbefestigungsvorrichtung nach Anspruch 18, dadurch gekennzeichnet, daß die Achse und ihre Verbindung mit den Achsenstützsektionen (64, 68) das elastische Biegen an den Verbindungsstellenregionen (74, 76) eliminiert.

20. Radkonsolenbefestigungsvorrichtung nach Anspruch 19, dadurch gekennzeichnet, daß ein elastomerer Bauteil (79) den Zylinder (66, 69) einschließt und in einem nach unten sich öffnenden und vertikal ausgerichteten rohrförmigen Segment (14A) an einem mit Rädern versehenen Fahrzeug aufgenommen ist, und daß Schwenkmittel (73, 78) vorgesehen sind, um den Konsolenbauteil (62, 63) an dem rohrförmigen Segment drehbar zu sichern, wobei der elastomere Bauteil der Schwenkbewegung der Konsolenbauteile nachgiebig widersteht.

21. Radkonsolenbefestigungsvorrichtung nach Anspruch 20, dadurch gekennzeichnet, daß die Schwenkmittel eine Achse (78) einschließen, welche sich parallel mit einer Drehebene (P1) des Rades (13B) erstreckt.

22. Radkonsolenbefestigungsvorrichtung nach Anspruch 20, dadurch gekennzeichnet, daß das untere Endteilstück des rohrförmigen Segmentes (14A) nach aussen in Richtungen seitlich zu einer Drehebene (P1) des Rades erweitert ist, und daß die Drehebene des Rades und die Achse des Zylinders (66, 69) unter einem spitzen Winkel zu der Vertikalen ausgerichtet sind, und daß der elastomere Bauteil (79) geformt ist, um den Raum zwischen dem Zylinder und der Innenwand des nach außen erweiterten Teils des rohrförmigen Segmentes einzunehmen.

23. Verfahren zur Herstellung einer Radkonsolenbefestigungsvorrichtung, die folgenden Verfahrensschritte umfassend: Ausstanzen, aus einem Metallblech, eines länglichen Konsolenbauteils (16, 116, 216, 316, 416, 62, 63), Formen, an dem einen Ende davon, einer zentralen Sektion (18, 118, 218, 318, 418, 66, 69) und Formen einer flachen, plattenartigen Achsenbefestigungssektion (17, 117, 217, 317, 417, 64, 68) an dem anderen Ende davon, Formen einer Zwischensektion (23, 123, 223, 323, 423, 67, 71) zwischen der zentralen Sektion und der Achsenbefestigungssektion, wobei das Formen der Zwischensektion den Schritt des Biegens des genannten Metalls seitlich der zentralen Sektion einschließt, um die Achsenbefestigungssektion horizontal und vertikal versetzt von der zentralen Sektion auszurichten, und den Schritt des Formens einer birnenförmigen Kontur daran, wobei die Mittelpunkte aller Krümmungsradien unter der gewölbten Schaftsektion angeordnet sind, dadurch gekennzeichnet, daß an dem einen Ende der Konsole eine gewölbte Schaftsektion (18 etc.) gebildet wird und eine Verbindungsstellenregion (24, 124, 224, 324, 424, 74, 76) zwischen der Zwischensektion (23 etc.) und der Achsenbefestigungssektion (17 etc.) gebildet wird, welche einen geringeren Widerstand gegenüber dem seitlichen Biegen als die Zwischensektion (23 etc.) und die Achsenbefestigungssektion (17 etc.) aufweist.

24. Verfahren nach Anspruch 23, dadurch gekennzeichnet, daß die Verfahrensstufe eingeschlossen ist, eine Achse (27) an die Achsenbefestigungssektion (17, 117 217, 317, 417, 64, 68) zu montieren, wobei der Verfabrensschritt das Stanzen einer nichtkreisförmigen Offnung (26) in der Achsenbefestigungssektion einschließt und das Placieren eines Endes der Achse (27) darin, so daß ein Teilstück davon sich von der gegenüberliegenden Seite erstreckt, wobei das Ende angestaucht wird, so daß das Material des Endes fließt, um die nichtkreisförmige Öffnung zu füllen, wodurch relative Bewegung zwischen der Achse und der Achsenbefestigungssektion verhindert wird.

25. Verfahren nach Anspruch 24, dadurch gekennzeichnet, daß der Verfahrensschritt eingeschlossen ist, ein Rad (13, 13A, 13B) auf der Achse (27) zu placieren und einen Anschlag (30) an dem Ende der Achse, entfernt von der Achsenbefestigungssektion, vorzusehen, um die axiale Bewegung des Rades zu begrenzen.

26. Verfahren nach Anspruch 23, dadurch gekennzeichnet, daß der Verfahrensschritt eingeschlossen ist, den Konsolenbauteil zu erwärmen und ihn zu ziehen, um so eine Rockwellhärte in dem Bereich von 45 bis 55 RC darauf aufzubringen.

## Revendications

1. Structure de montage d'une fourche de roue, comprenant au moins un élément de fourche allongé (16, 116, 216, 316, 416, 62, 63) comprenant une section de montage d'un axe (17, 117, 217, 317, 417, 64, 68) et une section de montage à tige (18, 118, 218, 318, 418, 66, 69) à des extrémités généralement opposées, la section de montage d'un axe comprenant une partie généralement plane, semblable à une plaque (17, 117, 217, 317, 417, 64, 68) décalée horizontalement et verticalement de la section de montage à tige, la section de montage à tige comprenant une tige allongée (19, 119, 219, 319, 419, 66, 69), de section transversale généralement courbe, à relier à un élément de support (14, 14a) sur un véhicule (10) à roues, ladite fourche comprenant de plus une section intermédiaire (23, 123, 223, 323, 423, 67, 71) renflée, entre le partie plane, semblable à une plaque, et la section de montage à tige, pour assurer une transition progressive entre elles pour résister à une flexion latérale, de sorte que la section de montage à tige et la section intermédiaire renflée présentent une résistance vis-à-vis d'une flexion latérale, élastique, relative, caractérisée en ce que la section de montage à tige (18, etc.) est d'une pièce avec la section intermédiaire (23, etc.) et est adaptée pour une fixation directe, sans pivotement, à l'élément de support (14, 14a), et en ce qu'une région (24, 124, 224, 324, 424, 74, 76) à la jonction entre la partie plane, semblable à une plaque (17, etc.) et la section intermédiaire renflée (23, etc.) éloignée de la section de montage à tige (18, etc.) est élastiquement flexible par rapport à la section à tige (18, etc.) et à la section intermédiaire (23, etc.) qui possède une plus grande résistance que la région de jonction (24, etc.), à une flexion élastique latérale.

2. Structure de montage d'une fourche de roue selon la revendication 1, comprenant un élément d'axe (27) fixé rigidement et en porte-à-faux à la partie plane, semblable à une plaque (17, 117, 217, 317, 417), l'axe (29) de l'élément d'axe s'étendant généralement perpendiculairement au plan de la partie plane, semblable à une plaque.

3. Structure de montage d'une fourche de roue selon la revendication 2, comprenant une roue (13) et des moyens de roulement supportant à rotation la roue sur l'élément d'axe (27), et dans laquelle des moyens d'arrêt (30) sont prévus sur l'élément d'axe (27) pour empêcher un mouvement axial de la roue (13) dans une direction l'écartant de la partie plane, semblable à une plaque (17, 117, 217, 317, 417), ce qui fait que l'axe est mobile avec la partie plane, semblable à une plaque, pendant sont mouvement de flexion élastique.

4. Structure de montage d'une fourche de roue selon la revendication 1, dans laquelle l'élément de fourche (16, 116, 216, 316, 416, 62, 63) est d'une seule pièce d'acier à forte teneur en carbone, d'épaisseur uniforme, traitée thermiquement et étirée jusqu'à une dureté Rockwell dans l'intervalle de 45 à 55 Rockwell C.

5. Structure de montage d'une fourche de roue selon la revendication 1, dans laquelle, lorsque le moyen à tige (19, 119, 219, 319) est relié à un véhicule (10) à roues, la partie semblable à une plaque (17, 117, 217, 317) est disposée dans un plan vertical parallèle à l'axe longitudinal (37) du moyen à tige.

6. Structure de montage d'une fourche de roue selon la revendication 1, dans laquelle, lorsque le moyen à tige (419, 66, 69) est relié à un véhicule à roues, la partie semblable à une plaque (417, 64, 68) est disposée dans un plan qui est incliné par rapport à la verticale et hors de parallélisme avec l'axe longitudinal (37) du moyen à tige.

7. Structure de montage d'une fourche de roue selon la revendication 2, dans laquelle la section intermédiaire (23, 123, 223, 323, 423, 67, 71) s'oppose à une flexion élastique dans une direction radiale par rapport à l'élément d'axe (27).

8. Structure de montage d'une fourche de roue selon les revendications 2 et 5, dans laquelle l'élément d'axe (27) oriente un plan central (P1) de la roue (13) montée à rotation sur lui, en alignement avec l'axe longitudinal (37) du moyen à tige (17, 117, 217, 317, 417).

9. Structure de montage d'une fourche de roue selon les revendications 2 et 6, dans laquelle l'élément d'axe oriente un plan central (P1) de la roue (13A) montée à rotation sur lui suivant un angle obtus ($\alpha$) supérieur à 170°, mais inférieur à 180°, par rapport à un plan aligné verticalement, contenant l'axe longitudinale (37) du moyen à tige (419) et orienté parallèlement à la direction de roulement de la roue autour de l'axe 29 de l'élément d'axe.

10. Structure de montage d'une fourche de roue selon la revendication 9, dans laquelle l'angle obtus ($\alpha$) se situe dans l'intervalle de 175° à 177°.

11. Structure de montage d'une fourche de roue selon la revendication 1, dans laquelle le moyen à tige (19, 319, 419) comprend la matière de l'élément de fourche (16, 316, 416) pliée à la forme d'un cylindre fermé.

12. Structure de montage d'une fourche de roue selon la revendication 11, dans laquelle le moyen à tige (319) comprend un manchon en élastomère (56) entourant la forme cylindrique fermée.

13. Structure de montage d'une fourche de roue selon la revendication 1, dans laquelle le moyen à tige (119) comprend la matière de l'élément de fourche (116, 62, 63), pliée en un premier segment semicylindrique (38, 66) et un second segment semicylindrique séparé (41, 69) juxtaposé au premier segment semicylindrique, pour ainsi définir un cylindre.

14. Structure de montage d'une fourche de roue selon la revendication 13, dans laquelle le second segment semicylindrique (41) comprend des moyens définissant une jupe (39) y fixée de manière intégrante et constituant l'image spéculaire au moins d'une partie de la section intermédiaire (123) adjacente à la section (118) de montage à tige.

15. Structure de montage d'une fourche de roue selon la revendication 1, dans laquelle la moyen à tige (119) comprend la matière de l'élément de fourche (116) pliée en un segment semicylindrique (38) et un élément en élastomère (43) ayant une première partie remplissant l'espace entre les branches du segment semicylindrique et une seconde partie faisant corps avec la première, ayant une forme se conformant à la forme du segment semicylindrique pour ainsi former un cylindre.

16. Structure de montage d'une fourche de roue selon la revendication 1, dans laquelle le moyen à tige comprend la matière de l'élément de fourche (216) pliée en forme de C, dont les branches (46, 47) se situent dans des plans écartés et parallèles, et un élément en élastomère (52) ayant ne première partie remplissant l'espace entre les branche de l'élément en forme de C, et une seconde partie faisant corps avec la première, ayant une forme se conformant à la forme de l'élément en C pour définir au moins un cylindre.

17. Structure de montage d'une fourche de roue selon la revendication 16, dans laquelle la région supérieure (53) des bords verticaux des branches (46, 47) est inclinée sur la verticale, vers une partie coudée de l'élément en C s'étendant entre les branches parallèles.

18. Structure de montage d'une fourche de roue selon la revendication 1, comprenant un autre élément de fourche allongé (63) qui est l'image spéculaire du premier élément de fourche (62), les éléments de fourche (62, 63) possédant chacun une section de montage à tige semicylindrique (66, 69) et une section intermédiaire renflée (67, 71) assurant la transition progressive entre la section de montage à tige et la section de montage de l'axe (64, 68), les éléments de fourche étant disposés côte à côte de façon que les sections de montage à tige semicylindrique définissent un cylindre, et les sections de montage de l'axe sont écartées horizontalement l'une de l'autre, un axe relié de manière fixe à, et s'étendant entre les sections de montage de l'axe, et une roue (13B) supportée à rotation sur l'axe.

19. Structure de montage d'une fourche de roue selon la revendication 18, dans laquelle l'axe et sa connexion aux sections de support de l'axe (64, 68) éliminent la flexion élastique dans les régions de jonction (74, 76).

20. Structure de montage d'une fourche de roue selon la revendication 19, dans laquelle un élément en élastomère (79) entoure le cylindre (66, 69) et est reçu dans un segment tubulaire (14A) s'ouvrant vers le bas et orienté verticalement sur un véhicule à roues, et dans laquelle des moyens de pivotement (73, 78) sont prévus pour fixer à pivotement l'élément de fourche (62, 63) au segment tubulaire, l'élément en élastomère s'opposant élastiquement à un mouvement de pivotement des éléments de fourche.

# 0 138 067

21. Structure de montage d'une fourche de roue selon la revendication 20, dans laquelle le moyen de pivotement comprend un axe (78) qui s'étend parallèlement à un plan de rotation (P1) de la roue (13B).

22. Structure de montage d'une fourche de roue selon la revendication 20, dans laquelle la partie terminale inférieure du segment tubulaire (14A) est évasée vers l'extérieur dans des directions latérales par rapport à un plan de rotation (P1) de la roue; et dans laquelle le plan de rotation de la roue et l'axe du cylindre (66, 69) sont orientés suivant un angle aigu par rapport à la verticale; et
dans laquelle l'élément en élastomère (79) est formé pour occuper l'espace entre le cylindre et la paroi interne de la partie évasée du segment tubulaire.

23. Procédé de fabrication d'une structure de montage d'une fourche, consistant à découper à l'emporte-pièce un élément de fourche allongé (16, 116, 216, 316, 416, 62, 63) hors d'une plaque métallique, à former à une extrémité de celui-ci une section centrale (18, 118, 218, 318, 418, 66, 69), et à former une section plane, semblable à une plaque (17, 117, 217, 317, 417, 64, 68), de montage d'un axe à son autre extrémité, à former une section intermédiaire (23, 123, 223, 323, 423, 67, 71) entre la section centrale et la section de montage de l'axe, la formation de la section intermédiaire comprenant le pliage du métal latéralement par rapport à la section centrale, pour disposer la section de montage de l'axe de façon décalée horizontalement et verticalement de la section centrale, et la formation d'un contour renflé sur elle, dont les centres de tous les rayons de courbure se trouvent en dessous de la section à tige courbe, caractérisé en ce que l'on forme à ladite extrémité de la fourche une section à tige courbe (18, etc.) et l'on forme entre la section intermédiaire (23, etc.) et la section de montage de l'axe (17, etc.) une région de jonction (24, 124, 224, 324, 424, 74, 76) qui a une moindre résistance à une flexion latérale que la section intermédiaire (23, etc.) et la section de montage de l'axe (17, etc.).

24. Procédé selon la revendication 23, comprenant l'assemblage d'un axe (27) à la section de montage de l'axe (17, 117, 217, 317, 417, 64, 68), le perçage d'une ouverture non circulaire (26) dans la section de montage de l'axe, et le placement d'une extrémité de l'axe (27) dans celle-ci, pour qu'une partie dépasse du côté opposé, le refoulement de ladite extrémité de sorte que la matière de ladite extrémité s'écoule pour remplir l'ouverture non circulaire, empêchant ainsi un mouvement relatif entre l'axe et la section de montage de l'axe.

25. Procédé selon la revendication 24, comprenant le placement d'une roue (13, 13A, 13B) sur l'axe (27) et la formation d'un arrêt (30) sur l'extrémité de l'axe éloignée de la section de montage de l'axe, pour limiter le mouvement axial de la roue.

26. Procédé selon la revendication 23, comprenant le chauffage de l'élément de fourche et son étirage pour lui conférer une dureté Rockwell dans l'intervalle de 45 à 55 RC.

16

FIG. I

FIG. 2

FIG. 2A

FIG. 3

FIG. 4

FIG. 5

FIG. 6

FIG. 8

FIG. 9

FIG. 10

FIG. 11

FIG. 12

FIG. 13

FIG. 14

FIG. 17

FIG. 15

FIG. 16

FIG. 18

FIG. 19

FIG. 20